Europäisches Patentamt

European Patent Office

Office européen des brevets

(19)

(11) **EP 0 979 801 A1**

(12) **EUROPEAN PATENT APPLICATION**

(43) Date of publication:
**16.02.2000 Bulletin 2000/07**

(51) Int. Cl.[7]: **C02F 1/14**, B01D 3/34

(21) Application number: **98500191.6**

(22) Date of filing: **11.08.1998**

(84) Designated Contracting States:
**AT BE CH CY DE DK ES FI FR GB GR IE IT LI LU MC NL PT SE**
Designated Extension States:
**AL LT LV MK RO SI**

(71) Applicant:
**Communauté Européenne (CE)
2920 Luxembourg (LU)**

(72) Inventors:
- **Sevilla, Alfonso
  Geohabitat SA
  04738 Vicar (ES)**
- **Colombo, Roberto
  21021 Angera (IT)**

(74) Representative:
**De Pablos Riba, Julio
Los Madrazo, 24
28014 Madrid (ES)**

(54) **Sea water desalination system by condensing air moisture**

(57) A sea water desalination system by condensing air moisture, intended to obtain fresh water from sea water, by using the ambient air heated by solar thermal energy (3), wherein two treatment stages are to be implemented consisting of a) saturating an air stream with steam proceeding from spraying sea water in a spraying station (8), and b) submitting the air satured with steam with steam to a cooling process within a condenser (7) and heat exchanger in order to reduce temperature of air and cause condensation of the steam into a collector device (10).

FIG.1

EP 0 979 801 A1

**Description**

**Object of the Invention**

The present invention relates to a system for desalinating water, by condensating the moisture contained in the air, by means of which a more efficient and economy solution to the problem of desalinating water, mainly the sea water, than with those techniques of the previous art, is provided, and which in this case makes use of an abundant and economical energy source such as the solar energy is.

**Background of the Invention**

Water is an essential resource for all aspects of the human life. However, it is not always is available, with the desired quality and quantity, in a particular place and time, therefore being a factor that can limit some important activities for the economy of different regions (for example, the tourism, agriculture, industry, etc.).

Fresh water is traditionally supplied by pumping of the ground water and withdrawing water from rivers and lakes. Since the purified water demand increases due to population growth and development increasing, the water-short regions with water are beginning to turn to unconventional methods of supply.

In order to overcome the outlined problems, desalination of salty waters may be a solution to be applied on a large scale in those countries and zones permitting it. Though technologies for desalinating water are relatively well developed, they have not been used as widely as should be desirable, mainly due to the cost of those technologies as compared with conventional supply options, a lack of awareness of their potential, and to a lack of institutional incentives to exploit such an unconventional water source.

The term "desalination" as it is used here, is referred to a water treatment process that separates the salty water into a waste water stream of high salt concentration, and a fresh water stream of low salt concentration, and it constitutes one of the principple alternative sources of fresh water available today.

Two main types of technologies for water desalination plan are known in the prior art: Distillation and Membrane separation processes.

Distillation processes comprise the Multiple-stage flash distillation (MSF), Multiple-effect distillation (MED), Vapour Compression (VC), Solar Humidification. All of these processes utilize steam from dedicated boilers. In the distillation processes, feedwater is heated and then evaporated to separate out dissolved minerals. Water vapour that is in turn condensed from fresh water.

In the Multiple-stage flash distillation process, the preheated sea water passes through a series of tubes without boiling. This is generally done by condensing steam on a bank of tubes located in the flash chamber. Here the water, after a number of steps, is heated but not boils because the pressure is low. Then, the sea water enter in a vessel where steam from an external source heats the sea water to the maximum process temperature but without causing its evaporation. Then, sea water passes to the evaporator chamber where ther ambient pressure is such that the water is immediately boiling. A part of the vapour condenses on the previous tubes located in the flash chamber that carry the incoming cooler sea water to the steam vessel. The vapour generated by flashing is then converted into fresh water. The most common cause that produce prejudice of failure in the heat exchanger is corrosion-erosion.

The Multiple-effect distillation (MED), like the Multiple-stage flash (MSF) process, takes place in a series of vessels and uses the principle of reducing the ambient pressure in the various evaporators. The sea water enters in the first evaporator and condenses in the second, and the heat from this condensation serves to boil the sea water in the latter. The sea water is sprayed onto the surface of the evaporator in a thin film to promote rapid boiling and evaporation. The tubes of the evaporator are heated by steam from a boiler or other source. Corrosion-erosion effect as MSF.

In the Vapour Compression (VC) process, the feed water is preheated in a heat exchanger by the outgoing streams of brine and fresh water, boils outside the tubes of an evaporator-condenser. Then, the vapour release is compressed and led back to condense inside the tubes, thus providing the heat necessary for the boiling process. The compressor creates a vacuum in the vessel and then compresses the vapour taken from the vessel and condenses it outside the tube bundle also in the same vessel. Sea water is sprayed on the outside of the heated tube bundle where it boils and partially evaporates, producing more water. The evaporation units consume most of the available energy of the low-pressure steam in successive heat exchange and throttling processes.

The Membrane separation processes mainly comprise the Reverse Osmosis (RO), and Electrodialysis (ED). Each of these processes uses the ability of the membranes to differentiate and selectively separate salts and water.

The Reverse Osmosis process uses semipermeable membranes and a high pressure to separe salts from the water. Reverse Osmosis works by forcing sea water through a semipermeable membrane which restricts salt and other minerals, but allowing the potable water to pass through. The quality of the water produced depends on the pressure, concentration of salts, and salt permeation constant of the membranes. The principles of RO are simple, but in practical terms, the RO process cannot go on indefinitely unless steps are taken to ensure that the membrane doesn't become clogged by the precipitated salts and other impurities forced against by the pressurized stream of feed water. Without the control discharge, the pressurized feed water would continue to increase in salt concentration, creating such problems as precipitation of supersatured salts and increased osmotic pressure across the membranes.

Electrodialysis depends on the natural ionisation of salts in solution and uses membranes that are selectively permeable to ions. Basically, an electrodialysis unit consists of several cell compartments through which a continous flow of sea water is pumped. Feed water passes simultaneously through the whole stack to provide a continous flow of desired water. The feed water must be preheated to prevent materials that could harm the membranes.

A process that uses direct solar energy for desalting saline water, is the Solar Humidification. Here, the saline water is heated by the sun's rays so that the production of water vapour (humidification) increases. Then, the vapour is condensed on a cool surface, and the condensate collected as product water. The main problems with making this process a commercial success are the high capital costs, the vulnerability to weather related damage, and the need for a large solar collection area (Shackleton 1995).

The sea water desalination technologies are worldwide implemented and utilize either electricity or thermal energy for the salt separation process. Regardless that solar energy is commonly available where desalination is required, a negligible amount of desalination processes make use of solar energy, either as a primary or back-up fuel. The reason is that desalination units for small production (10 to 100 cu.m) are usually planed to serve water necessities in isolated places where medium technical skills for maintaining the equipment are almost unavailable. Therefore, on top of economy solar deslination plants must consider additional requirements such as plant operation adaptability to big transients, low inertia as start-up, very easy maintenance and material availability in standard markets. The moisture condensation system is derived from the solar still method and applies conventional humidification engineering to improve the system efficiency, maintaining yet the outstanding characteristics of reliability, cost reduction and minimum maintenance requirements.

## Description of the Invention

The present invention proposes a desalination system intended to obtain fresh water from sea water, based on the evaporation and condensation of the sea water by using the ambient air heated by solar thermal energy. The condensing air moisture system of the present invention is derived from the solar still method and applies conventional humidification engineering to improve the still efficiency, maintaining yet the outstanding characteristics of reliability, cost reduction and minimum maintenance requirements of solar stills.

The plant relies on the psychrometric fact that water contents of one cubic meter of satured air depends on the temperature and may reach values of over 200 g at temperatures of around 90°.

Instead of moving water and separate the salt, the system moves air which is first satured to the highest possible degree by means of standard psychrometric techniques and further condensed with the same sea water source. Then, the system avoids the handling of brine and instead uses the humidification physics.

Additonal environmental benefits come from the avoidance of handling brine with anti scaling chemical additives as in standard methods.

The present desalination plant is intended to obtain fresh water from sea water as previously mentioned, based on the evaporation and concensation of the water, using solar thermal energy.

Usually, the water evaporation is obtained either by heating the water up to the boiling point at atmospheric pressure (100 °C), or by reducing the pressure down to the value corresponding to the steam pressure of the water at a given temperature. Under these conditions, the water boils and steam is produced.

In the present case, the boiling conditions of the water are not to be reached but takes advantage of the possibility of obtaining surface evaporation of water when in contac with a hot satured air flow. The air capacity to obtain humidity depends on its temperature, therefore, if satured air is cooled down, the dew point is reached, and a part of the water condenses. Therefore, the working principle is very simple:

- First step: Saturating a hot air stream
- Second step: Cooling down this stream to obtain water

In fact, the process of water following from the sea to the rains in the natural water cycle, is to be imitated.

The plant design proposed by the invention, has a good number of advantages that can make it a very interesting design for some sort of applications:

- The design is simple and solid
- Materials involved are not expensive and easy to get
- It is a very autonomous, easy to run, maintenance free and long life plant, as no sophisticated technology is used and high temperatures or vacuum pressures are avoided

- The plant can use solar energy, as the range of temperatures required corresponds to that obtained by means of solar collectors
- Modularity: the increase of the fresh water capacity can be obtained with modular units
- Ambient saving pollution: the use of solar energy, both thermal and photovoltaic, doesn't require energy produced by conventional sources
- Prefabricated plant for solar technologies and desalination plant, for the control units, for the batteries energy storage

Provided that energy efficiency is ensured, the above points make the desing very suitable for small and middle size plants that must work in isolated places or in areas with a low level of development.

Some preliminary calculations show that a plant design in accordance with the present invention can produce 10,000 l/day of fresh water (FW) by using energy from an air solar collector. This means:

a) 20,000 l/day of incoming water = IW
b) an energy efficient parameter to produce an amount of 1/10 water incoming evaporation = PA
c) an average working time of 5 h/day = HD

$$FW = IW * PA * HD = 20,000 * 1/10 * 5 = 10,000 \text{ l/day FW}$$

The above calculations indicate a reasonable design and an energy efficiency equivalence to 5-6 effects in a conventional evaporation plant.

The incoming water arrives from the sea at 15 °C and is heated up by humid air at 75°-80 °C in a heat exchanger in counter-current. The exchanger is of welded separated plates type (air flowing through the separated plates), with an exchanging area of 240 $m^2$.

The air will flow in a closed circuit in the plant. When cooling 1 $m^3$ of satured air from 75° down to 20 °C, condensation of about 0,2 kg of water is obtained. So, 10,000 $m^3$/h of humid air are needed in recirculation working 5h/day to produce 10,000 l/day of fresh water.

As the air is cooled down to 20 °C, excess humidity condenses and water is collected. The condensation latent heat is transferred to the water.

Water at the outlet of this exchanger is about 70 °C and it is now heated up to 80 °C with the solar energy in the solar collectors.

The water now arrives to the evaporation heat-mass exchanger, flowing in counter-current with the cool air at 20 °C. As the air is heated, it is being saturated by evaporating water.

The present exchanger has been thus designed to allow a contact surface area between the water and the air flowing of about 200 $m^2$, by means of successive trays of water and the air flowing at about 2.5 m/s.

The outcoming water is returned to the sea at about 25 °C. This means an energy consumption of about 116 kWh/$m^3$ of fresh water obtained, which is equivalent to a 5-6 effects boiling plant.

The present desing can be easily modified in the case of using solar air heaters instead of water heaters. The choice depends on the preference of the solar collectors.

It is to be considered that condensation of air moisture is a natural process demanding only a temperature below the dew point. In the majority of desertic areas, the night reradiation cools down objetcs over the ground to a point that condensation occurs along a few hours until sunset. Forcing this natural process is being developed by several R&D groups with outstanding success, reporting water productions 10 times above the natural rainfall. (Aerial well: secondary sources of water. Jumkis. A. Soil Science, Vol 100, No. 2).

**Brief Description of Drawings**

For a further description of the preferred embodiment of the present invention, reference will be made to the accompaning drawings, in which appears an design given in an exemplary and non limitative way:

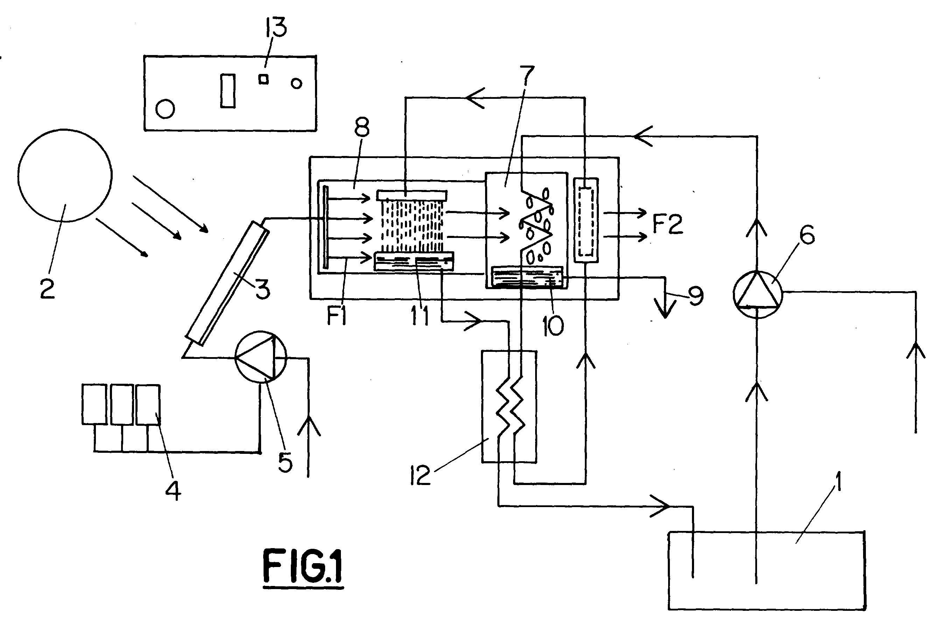

Figure 1 shows a diagrammatic view related to a preferred design of the desalination system of the present invention.

**Detailed Description of the Preferred Practical Embodiment**

As exposed above, the operation principle in which the system of the present invention is based, consists of saturating an air stream by means of the surface evaporation of the water, in order to proceed with the subsequent cooling of such air stream and cause condensation of steam present therein.

According to the preferred practical embodiment of the invention, which has been shown in Figure 1, the system is represented by several blocks, the block 1 representing the sea water and the block 2 representing the sun issuing solar rays that are collected by air solar collectors 3. The system is fitted with an unit 4 for generating photovoltaic energy, to electrically feeding those moving organs in the system, such as an air impeller 5, also named collector blower, connected to the inlet of the solar collectors, and a pump 6 provided for directing the sea water when being sucked from 1, to the inlet of the condenser and heat exchanger block 7. The solar collector assembly 3 has the outlet connected, by means of a suitable duct, to the interior of the block 8, related with condenser 7 and faced thereto, said block 8 consisting of a humidity chamber where the heated air proceeding from the solar collectors 3, is satured with the sea water, so that the air satured with steam is impelled to said condenser 7. Here, the heat exchange is carried out, by virtue of temperature of the water impelled by the pump 6, the temperatura of the circulating water being increased and producing condensation of the saturation steam of the air, so that fresh water can be obtained and withdrawn to a container 10 or similar within said condenser, and from this removed to the outside, e.g. by a duct 9. The sprayed water falling down in chamber 8 is collected by a device 11 from where it is returned to the block 1 for sea water passing through a cooling tower 12 where its temperature is reduced to 20-25 °C. The cooling tower 12 is used, in turn, to also reduce temperature of water coming from condenser 7 and that after the heat exchanging with the satured heated air, its temperature becomes increased.

As it will be understood, the sea water picked up from block 1, follows a circuit that permits its return to the initial place. That's to say, the water picked up and impelled by the pump 6 at a temperature of around 15-20 °C, accedes to the condenser 7 where its temperature is increased due to the heat transferred by the satured heated air, then passing through the cooling tower 12 where its temperature decreases to 30-40 °C. Below, the water is directed to a recovery area, referenced by F2, in which its temperature increases again up to 50-60 °C, being then directed to the block 8 where is sprayed to sature the incoming air, which is directed as indicated by F1. The aquous spraying falling down into the container 11, is directed back to the cooling tower 12, from where it continues toward the block 1, to which arrives with a temperature of around 20-25 °C.

Likewise, the heated air circulating by the solar collectors 3, is injected into the block 8, as indicated by F1, at a temperature comprised between about 60-90 °C. The air recovered in the location of F2 after the heat exchange and the subsequent steam condensation, is directed again into the inlet of said air solar collectors 3, reaching the latter at a temperature of about 30 °C.

Since the above representation only corresponds to an example of execution of the present invention, it will be understood that range of temperature values previously mentioned are not limitative, being however complementary with those exposed in the first part of the description.

The system may be controlled by means of a control station, referenced with 13 in the drawing.

The system of the present invention, compared to other technologies of the prior art, has a greater simplicity and flexibility of function because the process is realized by actuating two motors, one for flowing water (pump 6), and one for air solar collectors assembly (collectors 3). Electricity for consumption is produced by a photovoltaic array (unit 4). Furthermore, none high pressure pumping, none specific technological components but only standard markets devices are required.

**Claims**

1. Sea water desalination system by condensing air moisture, assisted by using solar energy, destined to provide suitable fresh water to be used, based on the design of a simple and solid, autonomous, of low maintenance, without environmental pollution and able to be modularily made working plant, characterized in that comprises implementation of two treatment stages for:

   a) Saturating an air stream with steam proceeding from spraying sea water in a spraying station (8), said air stream being impelled by a collector blower (5) through a solar collectors assembly (3), and
   b) Submitting the air satured with steam in the previous stage, to a cooling process within a condenser and heat exchanger (7), in order to reduce temperature of the air and cause condensation of the steam into a collector device (10), whereby obtaining the desired fresh wateer.

2. System according to claim 1, characterized in that furthermore comprises a means such as a pump (6) for picking up water (1) and impelling it by a suitable duct, toward the mentioned condenser (7), where the sea water temperature increases due to the heat exchange with the steam satured air, and from where said water is directed up to a cooling tower (12), in which the temperature of water decreases, and the outlet of which is connected by a suitable duct to the mentioned spraying station (8) in which the sea water is sprayed on the heated air to cause the desired steam saturation, and so that the falling water, after being removed from an adequate device (11), is directed again to the starting point (1), so being used a sole sea water circuit for the entire cycle.

3. System according to claim 1, characterized in that the air circuit comprises a collector blower (5) connected to the air solar collectors unit (5) in which the impelled air suffers an increasing of temperature, and from where the air at greater temperature is directed into the mentioned saturation station (8), said air being recovered after the steam condensation and directed again into said collector blower (5).

4. System according to any one of the previous claims, characterized in that furthermore includes, as auxiliary elements, a photovoltaic unit (4) to generate the electricity necessary for driving the collector blower (5) and pump (6) motors, and a control station.

**FIG.1**

EP 0 979 801 A1

## EUROPEAN SEARCH REPORT

European Patent Office

Application Number

EP 98 50 0191

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | DE 196 20 214 A (CHAFIK EFAT DR) 24 October 1996 * the whole document * | 1,3 | C02F1/14 B01D3/34 |
| X | US 4 308 111 A (PAMPEL LEONARD F) 29 December 1981 * column 3, line 14 - column 6, line 68; figure * | 1,3 | |
| X | US 4 363 703 A (ELDIFRAWI AHMED A ET AL) 14 December 1982 | 1,4 | |
| A | * column 4, line 53 - line 56; figure 1 * | 2 | |
| | | | TECHNICAL FIELDS SEARCHED (Int.Cl.6) |
| | | | C02F B01D |

The present search report has been drawn up for all claims

| Place of search | Date of completion of the search | Examiner |
|---|---|---|
| THE HAGUE | 7 January 1999 | Van Belleghem, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 98 50 0191

This annex lists the patent family members relating to the patent documents cited in the above-mentioned European search report.
The members are as contained in the European Patent Office EDP file on
The European Patent Office is in no way liable for these particulars which are merely given for the purpose of information.

07-01-1999

| Patent document cited in search report | | Publication date | Patent family member(s) | Publication date |
|---|---|---|---|---|
| DE 19620214 | A | 24-10-1996 | NONE | |
| US 4308111 | A | 29-12-1981 | NONE | |
| US 4363703 | A | 14-12-1982 | NONE | |

For more details about this annex : see Official Journal of the European Patent Office, No. 12/82

9